# EUROPÄISCHE PATENTSCHRIFT

(11) **EP 0 824 418 B1**
(45) Veröffentlichungstag und Bekanntmachung des Hinweises auf die Patenterteilung: **22.09.1999**
(21) Anmeldenummer: 96903892.6
(22) Anmeldetag: 16.02.1996
(51) Int. Cl.: B60R 21/16

(54) **VORRICHTUNG ZUM FALTEN UND PACKEN EINES GASSACKES FÜR AIRBAGMODULE**
DEVICE FOR FOLDING AND PACKING A GAS BAG FOR AIRBAG MODULES
DISPOSITIF DE PLIAGE ET D'EMBALLAGE DE SAC A GAZ POUR MODULE D'AIRBAG

(30) Priorität: 28.04.1995 DE 19516264
(43) Veröffentlichungstag der Anmeldung: 25.02.1998
(73) Patentinhaber: Petri AG, 63743 Aschaffenburg (DE)
(72) Erfinder: MAROTZKE, Thomas, D-13187 Berlin (DE); OSE, Falk, D-13189 Berlin (DE); GORKA, Andreas, D-10439 Berlin (DE)
(74) Vertreter: Bärmann, Klaus, Dipl.-Ing.
(86) Internationale Anmeldenummer: DE9600296
(87) Internationale Veröffentlichungsnummer: WO9633886

(56) Entgegenhaltungen:
- EP-A- 0 443 485
- DE-A- 4 422 276
- US-A- 5 162 035
- US-A- 5 300 011
- US-A- 5 360 387
- US-A- 5 391 137
- PATENT ABSTRACTS OF JAPAN vol. 14, no. 305 (M-0992), 29.Juni 1990 & JP,A,02 099442 (TOYODA GOSEI CO LTD), 11.April 1990,

## Beschreibung

Die Erfindung betrifft eine Vorrichtung zum Falten und Packen eines Gassackes für Airbagmodule nach dem Oberbegriff des Anspruchs 1.

Um den Gassack eines Airbagmoduls in einem Lenkrad bzw. bei einem Beifahrerairbagmodul bzw. Seitenairbagmodul im Bereich der Armaturentafel bzw. Tür verstauen zu können, ist es erforderlich, diesen zu falten und in einen Behälter zu drücken, der dann verschlossen wird. Neben anderen Faltungsarten ist eine Faltungsart nach DE 44 22 276 A1 bekannt, bei der der Gassack Hauptfaltlinien aufweist, die zumindest zu einem Teil entlang geschlossener Bahnen um ein gedachtes Zentrum auf dem im wesentlichen leeren, ausgebreiteten Gassack verlaufen. Die Faltung bis zur erforderlichen Packungsdichte, die für das Verstauen des Gassackes im Lenkrad oder an der Armaturentafel erforderlich ist, erfolgt so, daß in einem ersten Schritt das Falten entlang der genannten Hauptfaltlinien erfolgt und daß dieser vorgefaltete Gassack anschließend über mindestens teilweise die Hauptfaltlinien kreuzenden Nebenfaltlinien auf die gewünschte Endform gefaltet oder gedrückt, d.h. gerafft, wird.

Eine Vorrichtung zur Erzielung dieser Faltung und Raffung nach dem genannten Verfahren weist vorzugsweise ein topfartiges, zylindrisches Teil auf, das in die Aufblasöffnung eines Luftsackes einsetzbar ist, wobei die axiale Länge des zylindrischen Teils näherungsweise der Höhe des nach dem ersten Schritt gefalteten Luftsackpaketes entspricht. Weiterhin ist ein Niederhalter vorgesehen, der den der Aufblasöffnung gegenüberlilegenden Bereich des Luftsackes auf den Boden des zylindrischen Aufnahmeteiles drückt und festhält. Weiterhin sind auf den gegenüberliegenden Seiten des Luftsackes axial in Richtung auf den Luftsack bewegliche, schalenartige Elemente vorgesehen, die mit unterschiedlichen Radien konzentrisch zueinander angeordnet sind, wobei die Radien der gegenüberliegenden Elemente jeweils unterschiedlich sind.

Weiterhin sind radiale Raffelemente vorgesehen, die zusammen mit dem gefalteten Luftsack in eine Packvorrichtung einbringbar sind. In diese kann ebenfalls ein Generatorträger mit darin angeordnetem Gasgenerator eingebracht werden. Die Packvorrichtung weist weiterhin eine Vorrichtung zum Eindrücken des gefalteten Luftsackes in den Genaratorträger auf.

Werden diesen Falt- Raff- und Verdichtungselemente bekannte Antriebe, z. B. Druckzylinder, zugeordnet, ist der Aufwand für den Antrieb erheblich.

Der Erfindung liegt die Aufgabe zugrunde, eine Vorrichtung zur rationellen Faltung, Raffung und Verdichtung eines Gassackes zu schaffen.

Erfindungsgemäß wird das gemäß den kennzeichnenden Merkmalen des Anspruchs 1 erreicht.

Bei einer Vorrichtung zur Faltung, Raffung und Verdichtung eines Gassackes unter Verwendung von Faltelementen, Raffelementen und mindestens einem Stempel für die Verdichtung des Gassackes, wobei die Faltelemente mit Führungselementen versehen sind, die mit Druckelementen beaufschlagbar sind, ist als Führungselement an jedem Faltelement mindestens ein Dorn vorgesehen. Weiterhin ist das Druckelement drehbar und bezüglich der Dorne axial verschiebbar und in unterschiedlichen Drehlagen jeweils den Dornen eines Faltelementes zugeordnet. Im Bereich des gefalteten Gassackes sind senkrecht zum Druckelement wirkende, an ihren Enden ineinander greifende, gegeneinander verschiebbare Raffelemente vorgesehen.

In einer bevorzugten Ausführungsform weist das Druckelement die Form eines Sterns auf.

Es ist zweckmäßig, daß jedes Faltelement drei Dorne aufweist, denen als Druckelement ein dreiarmiger Stern zugeordnet ist. Weiterhin ist es zweckmäßig, jedem Dorn ein Klemmelement zuzuordnen.

Diese Vorrichtung weist den Vorteil auf, daß mit einem einzigen Druckelement sämtliche Faltelemente betätigt werden können. Der Stern befindet sich in einer Ausgangslage oberhalb der Dorne. Durch Drehen wird er den Dornen eines Faltelementes bzw. einer Gruppe fest miteinader verbundener Faltelemente zugeordnet. Anschließend werden mittels des Sternes die Dorne mit den Faltelementen gegen die Druckfedern in den Gassack gedrückt und damit wird die Faltung des Gassackes vorgenommen. In den Endlagen der Faltelemente werden diese durch die Klemmelemente, die auf die Dorne wirken, gehalten. Nachdem ein Faltelement bzw. mehrere miteinander fest verbundene Faltelemente zur gleichzeitigen Herstellung mehrerer Falten mittels der Dorne und des Sterns betätigt wurden, wird der Stern wieder in seine Ausgangslage gebracht. Der Rückhub der Faltelemente erfolgt mittels der Druckfedern. Durch Drehen wird der Stern einer neuen Gruppe von Dornen und damit einem neuen Faltelement zugeordnet und der beschriebene Vorgang wiederholt sich.

In einer weiteren Ausführungsform ist als Druckelement ein drehbarer und in die Faltelemente eingreifender axial verschiebbarer Stern vorgesehen. Dabei ist es zweckmäßig, daß Oberteile der Faltelemente für den Eingriff der Druckelemente durchgehende sternförmige Ausnehmungen aufweisen, die im Inneren der Oberteile kreisförmig erweitert sind. Der Stern kann durch die sternförmige Ausnehmung jedes Faltelementes in dessen Oberteil eingeführt werden. Durch anschließendes Drehen in der kreisförmigen Erweiterung wird er in eine Lage gebracht, in der er zwischen der oberen und unteren Wandung des Oberteils liegt. Dadurch kann das Faltelement mit Hilfe des Sternes sowohl nach unten gedrückt als auch nach oben gezogen werden. Wegen der durchgehenden sternförmigen Ausnehmungen in jedem Faltelement können übereinanderliegende Faltelemente einzeln durch den Stern betätigt werden.

In einer Ausführungsform sind dem Druckelement ein Schrittmotor für die Drehbewegung und ein Druckzylinder für die axiale Verschiebung zugeordnet. Eine andere Ausführungsform sieht vor, daß zur axialen Verschiebung des Druckelementes ein im Abstand zu diesem drehbar gelagerter Hebel vorgesehen ist, der mit einem Ende an einer Welle des Druckelementes und mit dem anderen Ende an einem mit einem Servomotor verbundenen, parallel zum Druckelement verschiebbaren Schlitten angelenkt ist, und daß für die Erzielung der Drehbewegung des Druckelementes ein Hebel vorgesehen ist, der mittels eines Druckzylinders schwenkbar ist.

Die Vorrichtung weist Raffelemente auf, die an ihren Enden ineinander greifen. Vorzugsweise sind an den Enden der Raffelemente Kulissensteine mit Führungsschlitzen für die sich kreuzenden, geschlitzten Enden der Raffelemente vorgesehen. Die Kulissensteine haben die Aufgabe, die Raffelemente zu führen sowie Spalte zwischen den Enden der miteinander kämmenden geschlitzten Enden der Raffelemente abzudecken. Die Kulissensteine weisen außerhalb der Raffelemente Befestigungselemente auf, die ein Herausrutschen der Kulissensteine verhindern. Sie stellen gleichzeitig eine zusätzliche Führung für die Raffelemente dar.

In einer Ausführungsform sind vier Raffelemente vorgesehen, die insbesondere unter einem solchen Winkel zueinander angeordnet sind, daß die Raffelemente eine im wesentlichen rechteck- oder trapezförmige Fläche einschließen.

Mittels dieser erfindungsgemäß ausgebildeten und angeordneten Raffelemente ist es möglich, den Gassack nach seiner Faltung und nach Entfernung der Faltelemente aus dem Bereich des gefalteten Gassackes allseitig zu raffen. Die Raffelemente gestatten sowohl eine gleichzeitige Raffung des gesamten Gassackes als auch eine zeitlich verschobene Raffung unterschiedlicher Abschnitte des Gassackes. So kann es z. B. zweckmäßig sein, den Gassack zuerst in einem Bereich zu raffen, in dem bei der späteren Verpackung im Lenkrad wenig Platz für die Unterbringung des Gassackes vorhanden ist. Dabei werden dann Abschnitte des Gassackes in Bereiche gedrückt, in denen mehr Platz für dessen Unterbringung vorhanden ist. Anschließend wird der Gassack in diesen Bereichen auf die erforderliche Größe gerafft.

Eine weitere Ausführungsform sieht vor, daß zwischen den Raffelementen und dem zu raffenden Gassack mindestens im Bereich der ineinandergreifenden Enden der Raffelemente mindestens ein Blech vorgesehen ist. Diese Bleche sollen ausschließen, daß sich der Gassack beim Raffvorgang zwischen den Enden der Raffelemente einerseits und den Kulissensteinen andererseits einklemmt. Die Bleche sind vorzugsweise an den Kulissensteinen befestigt.

In einer weiteren Ausführungsform sind zwei bogenförmige bzw. abgewinkelte Raffelemente vorgesehen, die ebenfalls geschlitzte Enden aufweisen, die entweder direkt oder in Kulissensteinen miteinander kämmen.

Die Raffelemente können eine dem zu raffenden Gassack zugeordnete gerade und/oder gekrümmte Fläche aufweisen. Der Verlauf dieser Fläche ist dabei der geforderten Form des gerafften Gassackes angepaßt.

Ein zur weiteren Verdichtung des Gassackes sowie zum Eindrücken in ein Gehäuse senkrecht zur Raffrichtung vorgesehener Stempel weist punkt- oder linienförmige Druckabschnitte auf. An diesen Druckabschnitten, die insbesondere entlang der Außenkontur des gefalteten und gerafften Gassackes verlaufen, wird der Gassack zuerst gepreßt. Da der Gassack beim Zusammenpressen nach innen ausweichen kann, wird die Gefahr des Herausquellens des Gassackes aus derm Gehäuse verringert.

Es ist zweckmäßig, daß mindestens ein nach Beendigung des Faltens und Raffens unterhalb des Gassackes einbringbarer Schieber vorgesehen ist, der Ausschnitte zum Umgreifen von Befestigungsbolzen des Airbagmoduls aufweist. Dieser Schieber wird nach Beendigung des Falt- und Raffvorganges unter den Gassack geschoben und gewährleistet, daß ein aus weichem Gewebe bestehender Gassack in seiner Lage bleibt und nicht nach unten fällt. Der Schieber gewährleistet weiterhin, daß der geraffte Gassack mit seien Befestigungsbolzen positionsgenau in das Gehäuse gedrückt werden kann.

Die Erfindung soll in Ausführungsbeispielen anhand von Zeichnungen erläutert werden. Es zeigen:
- Fig. 1: einen Längsschnitt durch Faltschalen mit Druckelement;
- Fig. 2: eine Draufsicht auf die Anordnung nach Fig.1 ohne Antriebe;
- Fig. 3: eine schematische Darstellung des axialen und Drehantriebes eines sternförmigen Druckelementes;
- Fig, 4: eine Draufsicht auf das sternförmige Druckelement mit Drehantrieb;
- Fig. 5: einen Schnitt durch mehrere übereinanderliegende Faltschalen;;
- Fig. 6 u. 7: Raffelemente, die eine im wesentlichen quadratrische Fläche umschließen, in Ausgangs- und Endstellung
- Fig. 8 u. 9: Raffelemente, die eine Trapezfläche umschließen, in Ausgangs- und Endstellung;
- Fig.10 u. 11: Raffelemente, die eine im wesentlichen rechteckige Fläche mit einer abgeschrägten Seite umschließen, in Ausgangs- und Endstellung;
- Fig.12 u. 13: eine Raffvorrichtung mit zwei Raffelementen in Ausgangs- und Endstellung;
- Fig.14 u.15: eine Raffvorrichtung mit vier ohne Kulissensteine zusammenwirkenden Raffelemente, in Ausgangs- und Endstellung;
- Fig. 16: einen Kulissenstein in der Draufsicht;
- Fig. 17: ein Element des Kulissensteines;
- Fig. 18: einen Stempel in der Ansicht von unten;
- Fig. 19: einen Querschnitt durch den Stempel nach Fig. 18;
- Fig. 20: einen Ausschnitt einer Faltstation;
- Fig. 21: einen Querschnitt durch die Anordnung nach Fig. 20;
- Fig. 22: einen Ausschnitt einer Packstation.

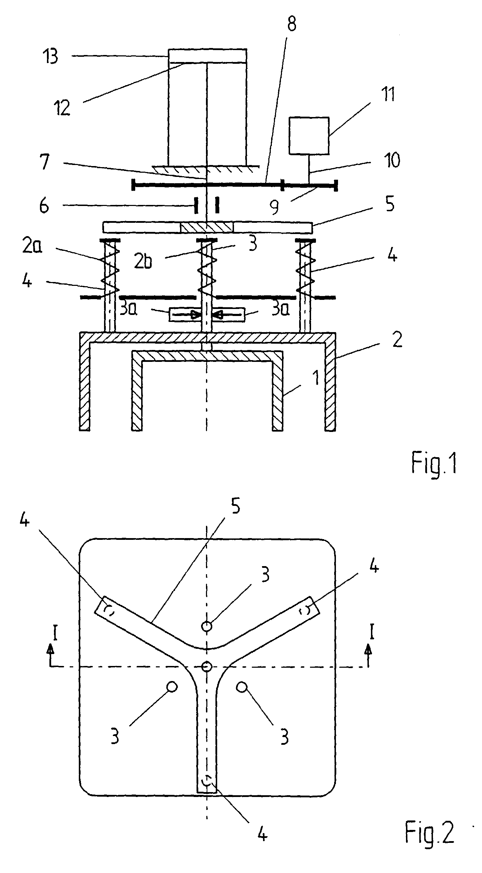

Beim Ausführungsbeispiel der Figuren 1 und 2 sind Faltelemente in Form von Faltschalen 1, 2 vorgesehen, die mit je drei Dornen 3 und 4 verbunden sind, wobei die Dorne 3 der Faltschale 1 und die Dorne 4 der Faltschale 2 zugeordnet sind. Oberhalb der Dorne 3, 4 ist als Druckelement ein Stern 5 vorgesehen, der in einem Lager 6, das schematisch dargestellt ist, drehbar und axial verschiebbar gelagert ist. Auf der Welle 7 des Sterns 5 ist ein Zahnrad 8 vorgesehen, dem ein Zahnrad 9 zugeordnet ist, das auf der Welle 10 eines Schrittmotors 11 befestigt ist. Weiterhin ist die Welle 7 mit einem Kolben 12 verbunden, der in einem Druckzylinder 13 vorgesehen ist. Wie insbesondere aus Fig. 2 ersichtlich ist, liegt der Stern 5 in der dargestellten Lage über den Dornen 4 der Faltschale 2. In dieser Lage würde beim Niederdrücken des Sternes 5 die Faltschale 1 durch die Faltschale 2 mitgenommen, d.h. der Faltvorgang würde gleichzeitig an zwei Stellen durchgeführt.

Befindet sich der Stern 5 in einer nicht dargestellten Ausgangslage über den Dornen 3, wird beim Absenken des Sternes zunächst nur die Faltschale 1 nach unten gedrückt. Nach Abschluß des Faltvorganges mittels dieser Faltschale 1 wird die Faltschale mittels Klemmelementen 3a in dieser Position gehalten und der Stern wird nach oben geschoben, bis er eine Stellung über den Dornen erreicht hat. Dabei verbleibt die Faltschale 1 in ihrer unteren Lage. Anschließend wird der Stern 5 mit Hilfe des Schrittmotors 11 in die in Fig. 2 dargestellte Stellung gedreht, in der er sich über den Dornen 4 befindet. Durch Absenken des Sternes wird dann die Faltschale 2 nach unten gedrückt und damit der zweite Faltvorgang durchgeführt. Der Rückholvorgang in die Ausgangslage erfolgt mittels Druckfedern 2a bzw. 2b.

Im Ausführungsbeispiel der Figuren 1 und 2 sind nur zwei Faltschalen dargestellt, um eine übersichtliche Darstellung zu erreichen. Die Anwendung der Erfindung erfolgt jedoch bei einer größeren Zahl von Faltschalen.

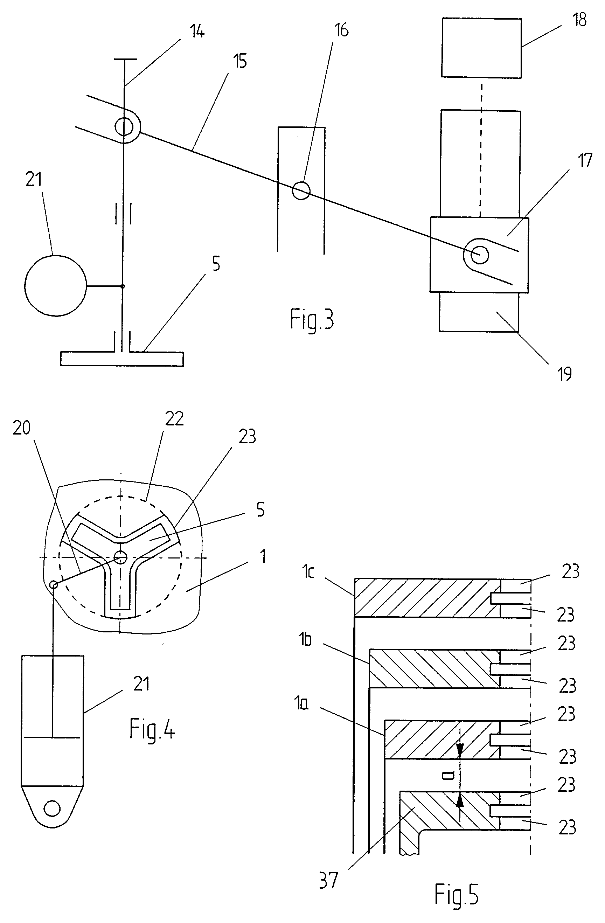

Beim Ausführungsbeipiel der Figuren 3 bis 5 ist eine erfindungsgemäße Vorrichtung schematisch dargestellt, bei der gegenüber dem vorigen Ausführungsbeispiel der Antrieb des Sternes 5 verändert ist. Der Stern 5 ist auf einer Welle 14 befestigt, an der mit seinem einen Ende ein Hebel 15 angelenkt ist, der in einem Lager 16 schwenkbar gelagert ist. Das andere Ende des Hebels 15 ist an einem Schlitten 17 angelenkt, der mittels eines Servomotors 18 auf einer Führung 19 linear bewegbar ist. Die Führung 19 ist parallel zur Welle 14 angeordnet, so daß sich bei Bewegung des Schlittens in einer Richtung die Welle 14 in die entgegengesetzte Richtung bewegt.

Die Drehbewegung des Sterns 5 wird über einen Hebel 20 mittels eines Druckzylinders 21 bewirkt. Der Stern greift bei dieser Ausführungsform in das Oberteil z.B. der Faltschale 1a ein. Dort ist ein kreisförmigen Ausschnitt 22 vorgesehen, der nach oben und unten sternförmige Öffnungen 23 aufweist. In diese Öffnungen ist der Stern von oben oder unten einführbar. Anschließend wird der Stern dann gedreht, bis er zwischen den Wandungen des Oberteils der Faltschale 1 liegt. In dieser Lage wird der Stern 5 und damit die Faltschale 1 anschließend mittels des Hebels 15 nach unten gedrückt.

Durch die sternförmigen Öffnungen 23 läßt sich der Stern 5 jeder der übereinanderliegenden Faltschalen 1a bis 1c zuordnen. Die Faltschalen sind mit einem Abstand a voneinander angeordnet, so daß innerhalb der durch den Abstand vorgegebenen Grenzen stufenlos unterschiedliche Faltenhöhen des Gassackes erzielbar sind. Weiterhin läßt sich mittels des Sterns der Stempel 37 betätigen.

Diese erfindungsgemäße Vorrichtung ist sowohl für Faltelemente, die von oben auf den Gassack einwirken als auch für Faltelemente die von unten auf den Gassack einwirken, einsetzbar. Es ist zweckmäßig, sowohl von oben als auch von unten wirkende Faltelemente vorzusehen.

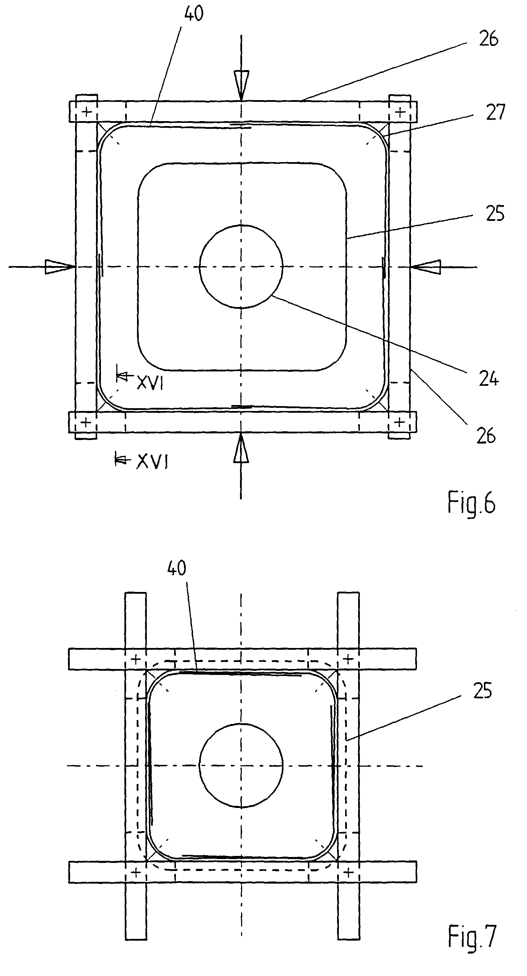

In den Figuren 6 bis 15 sind unterschiedliche Ausführungsbeispiele für die erfindungsgemäßen Raffelemente dargestellt. Die Fig. 6 zeigt einen Gasgenerator 24 mit einem annähernd quadratischen Trägerblech 25. Weiterhin sind vier Raffelemente 26 vorgesehen, die den nicht dargestellten Gassack, der sich über dem Trägerblech im gefaltenen Zustand befindet, allseitig umschließen. Die Enden der Raffelemente 26 sind geschlitzt und sind in Kulissensteinen 27 so geführt, daß sie sich dort kreuzen. Die Fig. 6 zeigt die Ausgangsstellung vor Beginn des Raffvorganges.

Die in Fig. 7 dargestellte Endstellung der Raffelemente wird durch gleichzeitige Verschiebung der Raffelemente in Richtung des gefalteten Gassackes erzielt. Für den Fall, daß für die Raffung des Gassackes nicht allseitig der gleiche Platz zur Verfügung steht, ist es zweckmäßig, mit der Raffung zunächst dort zu beginnen, wo wenig Platz für den Gassack zur Verfügung steht. Er wird dabei zum Teil in Bereiche gedrückt in denen mehr Platz zur Verfügung steht. Anschließend wird der Gassack dann in diesen Bereichen gerafft.

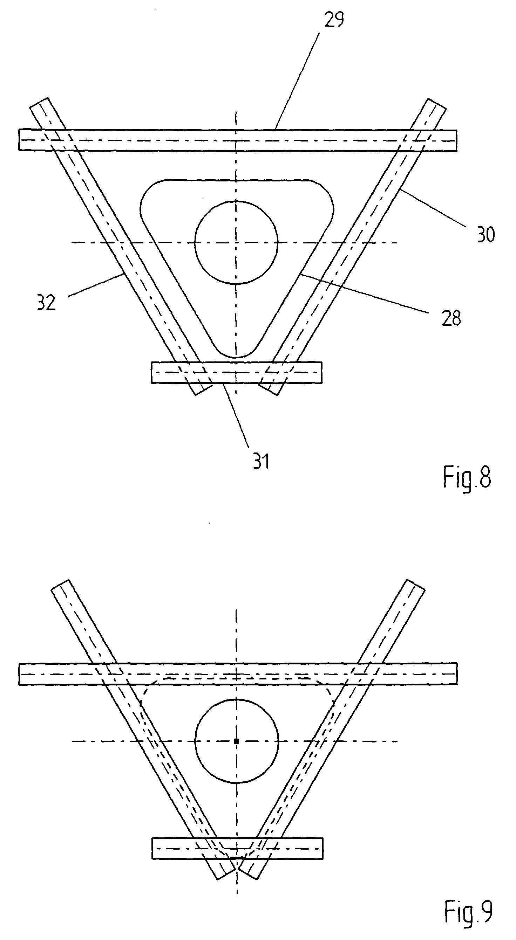

Beim Ausführungsbeispiel der Figuren 8 und 9 weist ein Trägerblech 28 eine im wesentlichen dreieckige Grundform auf. In diesem Fall sind vier Raffelemente 29 bis 32 vorhanden, die unterschiedliche Längen aufweisen und die so zueinander angeordnet sind, daß sie eine trapezförmige Fläche einschließen. Die Fig. 8 zeigt die Ausgangsstellung und die Fig 9 die Endstellung nach der Raffung.

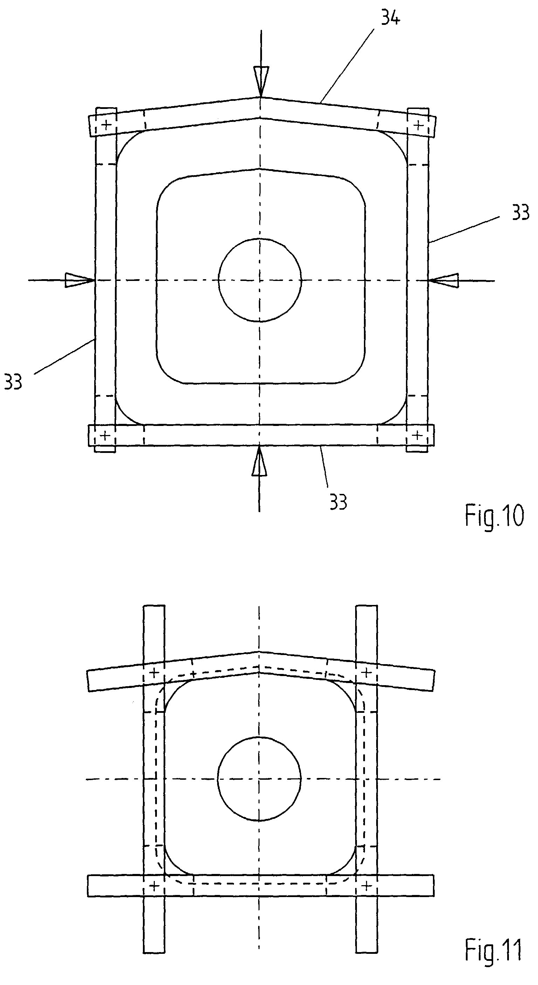

Die Figuren 10 und 11 zeigen eine Ausführungsform, bei der drei gleiche, geradlinige Raffelemente 33 und ein abgewinkeltes Raffelement 34 vorgesehen sind. Dabei zeigt die Fig. 10 die Ausgangsstellung und die Fig. 11 die Entstellung.

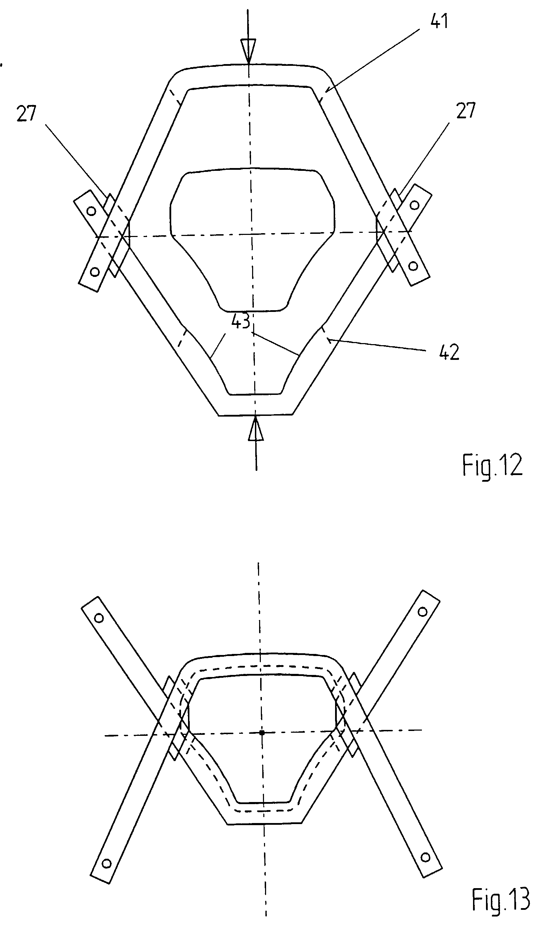

in den Figuren 12 und 13 ist eine Ausführungsform dargestellt, bei der zwei Raffelemente 41, 42 vorgesehen sind, deren Enden in Kulissensteinen 27 geführt sind. Diese Raffelemente weisen Winkelform mit im wesentlichen geradlinigem Verlauf der Flächen auf, die dem zu raffenden Gassack zugeordnet sind, wobei das Raffelement 42 zusätzlich gekrümmte Flächen 43 aufweist, die dem geforderten Verlauf des gerafften Gassackes entsprechen.

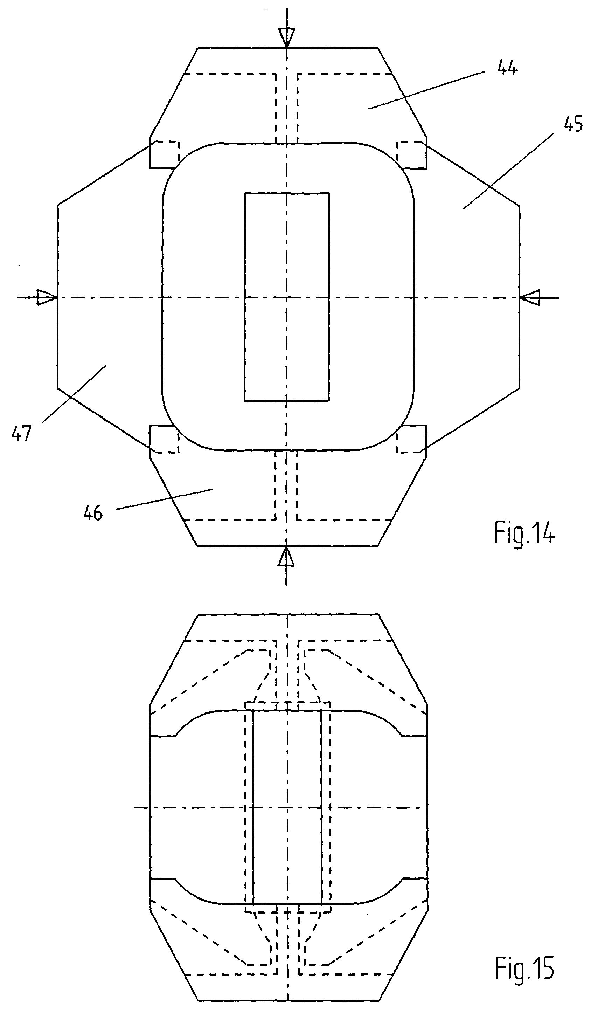

In den Figuren 14 und 15 ist eine Ausführungsform dargestellt, bei der vier Raffelemente 44 bis 47 vorgesehen sind, deren Enden ohne Kulissensteine miteinander kämmen. Bei dieser Ausführungsform ist die Überlappung der Enden der Raffelemente in der Ausgangsstellung so groß, daß sich eine Führung in einem Kulissenstein erübrigt.

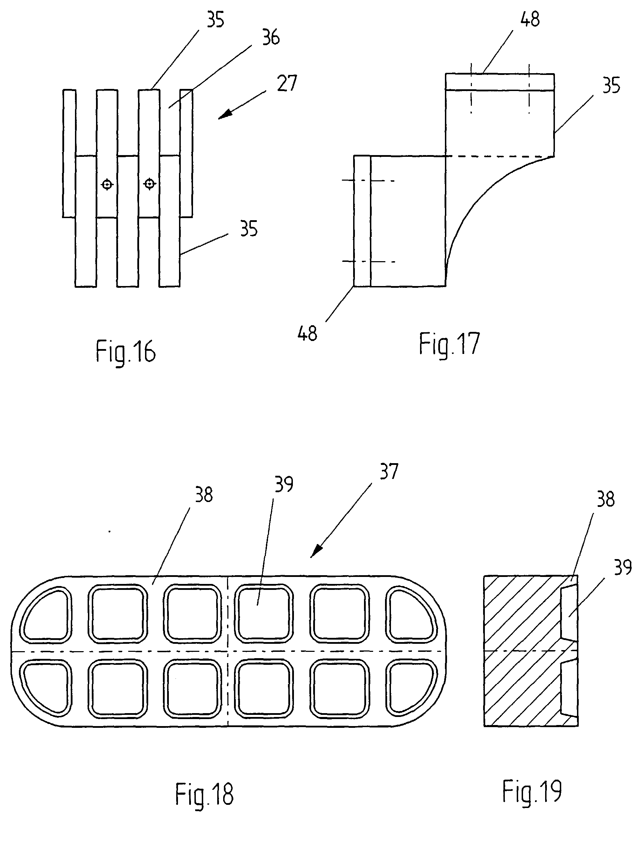

In der Fig. 16 ist ein Kulissenstein 27 dargestellt der aus Elementen 35 zusammengesetzt ist. Diese Elemente, die die in der Fig. 17 dargestellte Form haben, werden, wie in Fig. 16 dargestellt, miteinander verbunden. In die sich bildenden Schlitze 36 werden die entsprechend geschlitzten Enden der Raffelemente eingeführt und können dann in der Art, wie sie in den vorhergehenden Ausführungsbeispielen gezeigt wurde, sich kreuzend verschoben werden.

Die Fig. 16a zeigt den in Fig. 6 angegebenen Schnitt durch einen Kulissenstein. Das Raffelement 26 ist mit seinen geschlitzten Enden 26a und 26b in dem Kulissenstein 27 geführt. Um ein Herausfallen des Kulissensteins aus den Raffelementen zu verhindern, ist ein Befestigungselement 48 vorgesehen, das am Kulissenstein befestigt ist. Dieses Befestigungselement dient auch der Führung der Enden 26 a und 26b des Raffelementes 27.

Die Figuren 18 und 19 zeigen einen Stempel, der für das weitere Verdichten und Verpacken des Gassackes nach Beendigung der Faltung und Raffung vorgesehen ist. In der Fig. 18 ist die Unterfläche des Stempels 37 dargestellt. Diese Unterseite, die auf den Gassack einwirkt, weist hervorstehende Abschnitte 38 und Vertiefungen 39 auf. Wird der Gassack mittels dieses Stempels in ein Gehäuse eingedrückt, wird durch die hervorstehenden Abschnitte 38 und die benachbarten Vetiefungen verhindert, daß der Gassack über den Rand des Gehäuses hervorquillt und eingeklemmt wird.

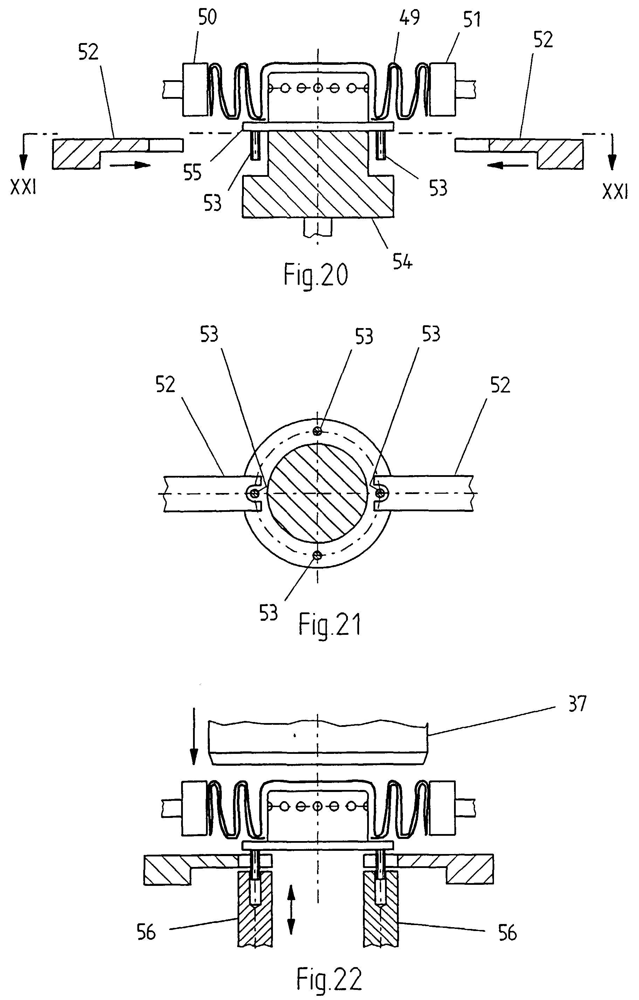

In der Fig. 20 ist ein Ausschnitt einer Faltstation für einen Gasssack 49 dargestellt. Der Gassack ist in dieser Darstellung gefaltet und gerafft und befindet sich noch zwischen den Raffelementen 50, 51. Zur Unterstützung des Gassackes 49 wird nach Abschluß des Falt- und Raffvorganges von zwei Seiten je ein Schieber 52 unter den Gassack geschoben, der im Bereich der Halteschrauben 53 ausgeklinkt ist, so daß er diese umgreifen kann. Weiterhin wird von unten eine Aufnahme 54 an den Gassgeneratorflansch 55 herangefahren.

Zusammen mit den Schiebern 52 und der Aufnahme 54 wird der Gassack in eine Packstation verfahren, in der zunächst Haltedorne 56 über die Halteschrauben 53 gefahren werden. Diese sind in der Fig. 22 versetzt gezeichnet, d.h. sie greifen über die Halteschrauben, die nicht durch die Schieber umgriffen werden. Anschließend werden die Schieber zurückgezogen und ein nicht dargestelltes Gehäuse wird hochgefahren. Mittels des Stempels 37 wird anschließend der Gassack in das Gehäuse gedrückt. Der Packvorgang ist damit im wesentlichen abgeschlossen.

## Patentansprüche

1. Vorrichtung zur Faltung, Raffung und Verdichtung eines Gassackes, insbesondere für ein Airbagmodul, unter Verwendung von Faltelementen, Raffelementen und mindestens einem Stempel für die Verdichtung des Gassackes, wobei die Faltelemente mit Führungselementen versehen sind, die mit Druckelementen beaufschlagbar sind,
**dadurch gekennzeichnet**,
daß als Führungselement an jedem Faltelement (1, 2) mindestens ein Dorn (3, 4) vorgesehen ist und daß das Druckelement drehbar und bezüglich der Dorne axial verschiebbar ist und in unterschiedlichen Drehlagen jeweils den Dornen eines Faltelementes zugeordnet ist, und daß im Bereich des gefalteten Gassackes senkrecht zum Druckelement wirkende, an ihren Enden ineinander greifende verschiebbare Raffelemente (26, 29 - 34) vorgesehen sind.

2. Vorrichtung nach Anspruch 1, **dadurch gekennzeichnet**, daß das Druckelement die Form eines Sterns (5) aufweist.

3. Vorrichtung nach Anspruch 1 oder 2, **dadurch gekennzeichnet**, daß an jedem Faltelement (1, 2) drei Dorne (3, 4) vorgesehen sind, denen als Druckelement ein dreiarmiger Stern (5) zugeordnet ist, und daß an jedem Faltelement mindestens eine Druckfeder für den Rückhub vorgesehen ist.

4. Vorrichtung nach mindestens einem der vorhergehenden Ansprüche, **dadurch gekennzeichnet**, daß den Dornen Klemmelemente zugeordnet sind.

5. Vorrichtung nach Anspruch 1, **dadurch gekennzeichnet**, daß als Druckelement ein drehbarer und in die Faltelemente eingreifender axial verschiebbarer Stern vorgesehen ist.

6. Vorrichtung nach Anspruch 4, **dadurch gekennzeichnet**, daß die Oberteile der Faltelemente für den Eingriff der Druckelemente durchgehende sternförmige Ausnehmungen aufweisen, die im Inneren der Oberteile kreisförmige Erweiterungen aufweisen.

7. Vorrichtung nach mindesten einem der vorhergehenden Ansprüche, **dadurch gekennzeichnet**, daß dem Druckelement (5) ein Schrittmotor (11) für die Drehbewegung und ein Druckzylinder (13) für die axiale Verschiebung zugeordnet sind.

8. Vorrichtung nach mindestens einem der vorhergehenden Ansprüche, **dadurch gekennzeichnet**, daß zur axialen Verschiebung des Druckelementes (5) ein im Abstand zu diesem drehbar gelagerter Hebel (15) vorgesehen ist, der mit einem Ende an einer Welle (14) des Druckelementes und mit dem anderen Ende an einem mit einem Servomotor (18) verbundenen, parallel zur Welle des Druckelementes verschiebbaren Schlitten (17) angelenkt ist, und daß für die Erzielung der Drehbewegung des Druckelementes (5) ein Hebel (20) vorgesehen ist, der mittels eines Druckzylinders (21) schwenkbar ist.

9. Vorrichtung nach mindestens einem der vorhergehenden Ansprüche, **dadurch gekennzeichnet**, daß an den Enden der Raffelemente Kulissensteine (27) mit Führungsschlitzen (36) für die sich kreuzenden, geschlitzten Enden der Raffelemente vorgesehen sind.

10. Vorrichtung nach Anspruch 9, **dadurch gekennzeichnet**, daß die Kulissensteine außerhalb der Raffelemente Befestigungselemente aufweisen.

11. Vorrichtung nach mindestens einem der vorhergehenden Ansprüche, **dadurch gekennzeichnet**, daß vier Raffelemente vorgesehen sind.

12. Vorrichtung nach mindestens einem der vorhergehenden Ansprüche, **dadurch gekennzeichnet**, daß vier Raffelemente unter einem solchen Winkel zueinander angeordnet sind, daß die Raffelemente eine im wesentlichen rechteck- oder trapezförmige Fläche einschließen.

13. Vorrichtung nach mindestens einem der vorhergehenden Ansprüche, **dadurch gekennzeichnet**, daß zwischen den Raffelementen und dem zu raffenden Gassack mindestens im Bereich der ineinandergreifenden Enden der Raffelemente mindestens ein Blech (40) vorgesehen ist.

14. Vorrichtung nach Anspruch 13, **dadurch gekennzeichnet**, daß die Bleche an den Kulissensteinen befestigt sind.

15. Vorrichtung nach mindestens einem der vorhergehenden Ansprüche, **dadurch gekennzeichnet**, daß zwei bogenförmige bzw. abgewinkelte Raffelemente vorgesehen sind.

16. Vorrichtung nach mindestens einem der vorhergehenden Ansprüche, **dadurch gekennzeichnet**, daß die Raffelemente eine dem zu raffenden Gassack zugeordnete gerade und/oder gekrümmte Fläche aufweisen.

17. Vorrichtung nach mindestens einem der vorhergehenden Ansprüche, **dadurch gekennzeichnet**, daß ein den Gassack in seine Packungshöhe drückender Stempel (37) mit punkt- oder linienförmigen Druckabschnitten (38) vorgesehen ist.

18. Vorrichtung nach mindestens einem der vorhergehenden Ansprüche, **dadurch gekennzeichnet**, daß mindestens ein nach Beendigung des Faltens und Raffens unterhalb des Gassackes einbringbarer Schieber vorgesehen ist, der Ausschnitte zum Umgreifen von Befestigungsbolzen des Airbagmoduls aufweist.

## Claims

1. Device for folding, gathering and compacting a gas bag, more particularly for an airbag module, by using folding elements, gathering elements and at least one ram for compacting the gas bag, wherein the folding elements are provided with guide elements which can be biased by pressure elements,
characterised in that
at least one mandrel (3,4) is provided as the guide element on each folding element (1,2) and that the pressure element is rotatable and axially displaceable relative to the mandrels and is associated in different rotary positions with each relevant mandrel of a folding element, and that displaceable gathering elements (26, 29-34) which engage in each other at their ends are provided in the area of the folded gas bag and act perpendicular to the pressure element.

2. Device according to claim 1 characterised in that the pressure element has the shape of a star (5).

3. Device according to claim 1 or 2 characterised in that three mandrels (3,4) are provided on each folding element (1,2) and are associated with a triple-armed star (5) as the pressure element, and that at least one compression spring is provided for the return stroke on each folding element.

4. Device according to at least one of the preceding claims characterised in that clamping elements are associated with the mandrels.

5. Device according to claim 1 characterised in that a rotatable axially displaceable star engaging in the folding elements is provided as the pressure element.

6. Device according to claim 4 characterised in that the upper parts of the folding elements have continuous star-shaped recesses for the engagement of the pressure elements and these recesses have circular expansions in the inside of the upper parts.

7. Device according to at least one of the preceding claims characterised in that the pressure element is associated with a stepped motor (11) for the rotary movement and a pressure cylinder (13) for the axial displacement.

8. Device according to at least one of the preceding claims characterised in that for axially displacing the pressure element (5) there is a lever (15) which is mounted rotatable at a distance from the pressure element and is attached at one end to a shaft (14) of the pressure element and at the other end to a slide carriage (17) which is connected to a servo motor (18) and is displaceable parallel to the shaft of the pressure element, and that a further lever (20) is provided for producing the rotary movement of the pressure element (5) and this lever can be swivelled by means of a pressure cylinder (21).

9. Device according to at least one of the preceding claims characterised in that slide blocks (27) having guide slits (36) for the criss-crossing slit ends of the gathering elements are provided at the ends of these gathering elements.

10. Device according to claim 9 characterised in that the slide blocks have fastening elements outside of the gathering elements.

11. Device according to at least one of the preceding claims, characterised in that four gathering elements are provided.

12. Device according to at least one of the preceding claims characterised in that four gathering elements are arranged at such an angle relative to each other that the gathering elements include a substantially rectangular or trapezoidal surface.

13. Device according to at least one of the preceding claims characterised in that at least one sheet metal plate (40) is provided between the gathering elements and the gas bag to be gathered at least in the area of the interengaging ends of the gathering elements.

14. Device according to claim 13 characterised in that the sheet metal plates are fixed on the slide blocks.

15. Device according to at least one of the preceding claims characterised in that two curved or angled gathering elements are provided.

16. Device according to at least one of the preceding claims characterised in that the gathering elements have a straight and/or curved surface associated with the gas bag to be gathered.

17. Device according to at least one of the preceding claims characterised in that a ram (37) which presses the gas bag into its packing height is provided with spot or linear pressure sections (38).

18. Device according to at least one of the preceding claims characterised in that at least one slider is provided which can be introduced underneath the gas bag after the folding and gathering has been completed and which has cut-out sections for engaging round the fastening bolts of the airbag module.

## Revendications

1. Appareil pour plier, serrer et compacter un coussin à gaz, en particulier pour un module de coussin d'air dit "airbag", en utilisant des éléments de pliage, des éléments de serrage, et au moins un poinçon pour le compactage du sac à gaz, dans lequel les éléments de pliage sont pourvus d'éléments de guidage susceptibles d'être attaqués par des éléments de compression,
caractérisé en ce que
à titre d'élément de guidage, il est prévu sur chaque élément de pliage (1, 2) au moins une broche (3, 4), et en ce que l'élément de compression est disposé avec faculté de rotation et en déplacement axial vis-à-vis des broches, et est associé respectivement aux broches d'un élément de pliage dans différentes positions de rotation, et en ce que dans la région du coussin à gaz plié, il est prévu des éléments de serrage (26, 29 - 34) mobiles agissant perpendiculairement par rapport à l'élément de compression et s'engageant l'un dans l'autre à leurs extrémités.

2. Appareil selon la revendication 1, caractérisé en ce que l'élément de compression a la forme d'une étoile (5).

3. Appareil selon l'une ou l'autre des revendications 1 et 2, caractérisé en ce qu'il est prévu trois broches (3, 4) sur chaque élément de pliage (1, 2), auxquelles est associé à titre d'élément de compression une étoile à trois branches (5), et en ce qu'il est prévu au moins un ressort de compression pour la course de retour sur chaque élément de pliage.

4. Appareil selon l'une au moins des revendications précédentes, caractérisé en ce que des éléments de pincement sont associés aux broches.

5. Appareil selon la revendication 1, caractérisé en ce qu'il est prévu à titre d'élément de compression une étoile en rotation et en déplacement axial, qui s'engage dans les éléments de pliage.

6. Appareil selon la revendication 4, caractérisé en ce que les parties supérieures des éléments de pliage présentent pour l'engagement des éléments de compression des évidements traversants en forme d'étoile, qui présentent des élargissements de forme circulaire à l'intérieur des parties supérieures.

7. Appareil selon l'une au moins des revendications précédentes, caractérisé en ce qu'il comprend un moteur pas à pas (11) pour le mouvement de rotation, et un cylindre de pression (13) pour le déplacement axial, associés à l'élément de compression (5).

8. Appareil selon l'une au moins des revendications précédentes, caractérisé en ce que pour le déplacement axial de l'élément de compression (5), il est prévu un levier (15) monté en rotation à distance de celui-ci, ledit levier étant articulé à une extrémité à un arbre (14) de l'élément de compression, et à l'autre extrémité à un chariot (17) relié à un servomoteur (18) et susceptible de se déplacer parallèlement à l'arbre de l'élément de compression, et en ce que pour produire le mouvement de rotation de l'élément de compression (5), il est prévu un levier (20), susceptible de basculer au moyen d'un cylindre à pression (21).

9. Appareil selon l'une au moins des revendications précédentes, caractérisé en ce que, aux extrémités des éléments de serrage, sont prévus des patins de coulissement (27) avec des fentes de guidage (36) pour les extrémités fendues qui se croisent des éléments de serrage.

10. Appareil selon la revendication 9, caractérisé en ce que les patins de coulissement présentent des éléments de fixation à l'extérieur des éléments de serrage.

11. Appareil selon l'une au moins des revendications précédentes, caractérisé en ce qu'il est prévu quatre éléments de serrage.

12. Appareil selon l'une au moins des revendications précédentes, caractérisé en ce qu'il est prévu quatre éléments de serrage, agencés les uns par rapport aux autres sous un angle tel que les éléments de serrage enferment une surface sensiblement rectangulaire ou trapézoïdale.

13. Appareil selon l'une au moins des revendications précédentes, caractérisé en ce qu'il est prévu entre les éléments de serrage et le coussin à gaz à serrer, au moins une tôle (40), au moins dans la région des extrémités en engagement mutuel des éléments de serrage.

14. Appareil selon la revendication 13, caractérisé en ce que les tôles sont fixées sur les patins de coulissement.

15. Appareil selon l'une au moins des revendications précédentes, caractérisé en ce qu'il est prévu deux éléments de serrage de forme cintrée ou coudée.

16. Appareil selon l'une au moins des revendications précédentes, caractérisé en ce que les éléments de serrage comportent une surface droite et/ou cintrée, associée au coussin à gaz à serrer.

17. Appareil selon l'une au moins des revendications précédentes, caractérisé en ce qu'il est prévu un poinçon (37), qui écrase le coussin à gaz dans sa hauteur, avec des tronçons de compression (38) de forme ponctuelle ou linéaire.

18. Appareil selon l'une au moins des revendications précédentes, caractérisé en ce qu'il est prévu au moins un coulisseau susceptible de se rétracter au-dessous du coussin à gaz après la fin du pliage et du serrage, lequel présente des tronçons destinés à entourer des goujons de fixation du module à airbag.
